# EUROPÄISCHE PATENTSCHRIFT

(11) **EP 0 298 562 B1**
(45) Veröffentlichungstag und Bekanntmachung des Hinweises auf die Patenterteilung: **29.09.1993**
(21) Anmeldenummer: 88201406.1
(22) Anmeldetag: 05.07.1988
(51) Int. Cl.: H02M 3/156, H02M 1/12

(54) **Schaltungsanordnung zum Übertragen elektrischer Energie**
Circuit arrangement for the transmission of electric energy
Disposition de circuit pour la transmission d'énergie électrique

(30) Priorität: 07.07.1987 DE 3722337
(43) Veröffentlichungstag der Anmeldung: 11.01.1989
(73) Patentinhaber: Philips Patentverwaltung GmbH, 22335 Hamburg (DE); Philips Electronics N.V., 5621 BA Eindhoven (NL)
(72) Erfinder: Albach, Manfred, D-5100 Aachen (DE)
(74) Vertreter: Peters, Carl Heinrich, Dipl.-Ing.

(56) Entgegenhaltungen:
- DE-A- 3 302 093
- US-A- 3 896 348
- US-A- 4 626 981
- PATENT ABSTRACTS OF JAPAN vol. 10, no. 32 (E-379)(2089) 7 Februar 1986 & JP-A-60 190164

## Beschreibung

Die Erfindung bezieht sich auf eine Schaltungsanordnung zum Übertragen elektrischer Energie gemäß dem Oberbegriff des Hauptanspruchs.

Aus dem Buch "Schaltnetzteile in der Praxis" von Otmar Kilgenstein, Vogel Buchverlag, Seiten 105 ff. ist ein Eintakt-Flußwandler für Netzbetrieb bekannt, bei dem die Netzwechselspannung in einem Brückengleichrichter gleichgerichtet wird und einen Ladekondensator auflädt. An den Ladekondensator ist die Reihenschaltung aus der Primärwicklung eines Transformators und einem Transistor angeschlossen, der durch eine Ansteuerschaltung abwechselnd ein- und ausgeschaltet wird. Über eine Sekundärwicklung des Transformators kann dem Ladekondensator Energie entnommen werden.

Bei der beschriebenen Schaltungsanordnung werden durch die Schaltvorgänge des als periodisch betätigter Halbleiterschalter verwendeten Transistors an der Wechselspannungsquelle, d.h. z.B. auf der Netzwechselspannung, hochfrequente Störspannungen und -ströme hervorgerufen, die beispielsweise eine Störung weiterer, mit der Wechselspannungsquelle verbundener Verbraucher hervorrufen können. Zur Unterdrückung dieser Störungen ist es bekannt, passive Hochfrequenzfilter aus Spulen, Kondensatoren und eventuell auch ohmschen Widerständen zwischen der Wechselspannungsquelle und den übrigen Teilen der Schaltungsanordnung anzuordnen. Ein derartiges Funkentstörfilter ist in "Schaltnetzteile in der Praxis" in der Unterschrift zu Bild 5.1 auf Seite 105 erwähnt. Derartige Filter sind jedoch aufwendig und kostspielig, auch ihr Anteil am Volumen der gesamten Schaltungsanordnung ist beträchtlich.

Aus der englischsprachigen Kurzzusammenfassung der Druckschrift JP-A-60 190164 ist eine Schaltungsanordnung bekannt, mit der die Erzeugung von Störungen wie z.B. unnötige Strahlung dadurch eliminiert werden soll, daß ein Schalterelement ausgeschaltet wird, wenn eine pulsierende Spannung einen bestimmten Wert überschreitet, wobei die Übertragung der pulsierenden Spannung zur Ausgangsseite der Schaltung ausgeschaltet wird.

Aus der US-A-3 896 348 und der zugehörigen Prioritätsanmeldung DT 23 33 570 A1 ist eine Schaltungsanordnung zur Speisung eines Gleichstromverbrauchers aus einer Wechselstromquelle über einen Gleichrichter bekannt. Bei dieser Schaltungsanordnung soll eine Verringerung des Blindleistungsbedarfs dadurch erzielt werden, daß zwischen Gleichrichter und Gleichstromverbraucher ein Gleichstromsteller geschaltet ist, dessen Steuersatz mit der Wechselstromquelle synchronisiert ist.

Aus der DE 33 02 093 A1 ist eine Schaltungsanordnung zur Verminderung des Oberwellenanteils im Netzstrom bei Netzgleichrichtung bekannt. Darin sind ein Ladekreis für einen ersten Kondensator, ein Entladekreis für den ersten Kondensator und zur Aufladung eines zweiten Kondensators und ein Haltekreis zur Aufrechterhaltung des Stromflusses vorgesehen. Diese Schaltung soll eine deutliche Senkung des Oberwellenanteils bewirken und sich insbesondere für elektronische Vorschaltgeräte von Entladungslampen eignen und ohne große, teure und schwere Siebdrosseln bzw. aufwendige, teure aktive Filterschaltungen auskommen.

Aus der US-A 4 626 981 ist eine Stromversorgungsschaltung bekannt, die an zwei Wechselspannungen verschiedener Höhe arbeiten kann. Bei Betrieb an 220 V lädt ein Brückengleichrichter als Vollwellengleichrichter jeden einer Serienschaltung von Kondensatoren auf die halbe Amplitude der Wechselspannung auf. Während der positiven Halbperiode der Wechselspannung wird eine positive Spannung, die gleich der Differenz zwischen der augenblicklichen Versorgungsspannung und der Gleichspannung über dem ersten Kondensator ist, zwischen zwei Anschlüsse einer Last gekoppelt. Eine entsprechende negative Differenzspannung wird zwischen die beiden Anschlüsse während der anderen Halbperiode gekoppelt. Beim Betrieb an 110 V Wechselspannung wird die Gleichrichteranordnung in einer anderen Zusammenschaltung betrieben, mit der erreicht werden soll, daß die gesamte Wechselspannung zwischen zwei Anschlüssen der Last anliegt, wobei der Brückengleichrichter als Spannungsverdoppler arbeitet.

Die Erfindung hat die Aufgabe, eine Schaltungsanordnung der eingangs genannten Art dahingehend zu verbessern, daß darin auftretende Störungen mit einfacheren, platzsparenderen und kostengünstigeren Mitteln unterdrückt werden.

Diese Aufgabe wird dadurch gelöst, daß die Ansteuerschaltung vorgesehen ist zum Betätigen des Halbleiterschalters nur außerhalb der Zeitintervalle, in denen die Wechselspannungsquelle mit dem Energiespeicher verbunden ist.

Der Erfindung liegt die Erkenntnis zugrunde, daß die vom periodisch betätigten Schalter hervorgerufenen Störungen im wesentlichen nur dann auf die Wechselspannungsquelle übertragen werden, wenn diese mit dem Energiespeicher zum Einspeisen der Energie verbunden ist. Erfindungsgemäß wird die Betätigung des Halbleiterschalters in diesen Zeitintervallen unterbrochen, so daß dann keine Störungen erzeugt werden. Während der übrigen Zeit, in der die Wechselspannungsquelle vom Energiespeicher getrennt ist, werden vom Halbleiterschalter hervorgerufene Störungen durch diese Trennung von der Wechselspannungsquelle wenigstens weitgehend ferngehalten. Damit kann ein Funkentstörfilter herkömmlicher Bauart entfallen.

In den Zeitintervallen, in denen die Gleichrichterstufe zum Nachladen des Energiespeichers sich im leitenden Zustand befindet, wird dann die Betätigung des Halbleiterschalters unterbrochen, so daß von diesem keine Störungen über die leitende Gleichrichterstufe in die Wechselspannungsquelle eingestreut werden.

Die Wechselspannungsquelle wird bevorzugt durch ein Stromversorgungsnetz gebildet. Die Erfindung verhindert dann ein Einstreuen von Störungen in dieses Stromnetz und damit eine Störung anderer, ebenfalls daraus gespeister Verbraucher, wie z.B. elektronischer Geräte der Nachrichten- oder Datenverarbeitungstechnik. Als Wechselspannungsquelle kann jedoch auch eine Zerhackerschaltung oder ähnliches eingesetzt werden, die dann durch die Erfindung gegen Rückwirkungen aus nachfolgenden Schaltungsteilen geschützt wird.

Zur weiteren Unterdrückung von Störungen kann es darüber hinaus vorteilhaft sein, daß die Gleichrichterstufe durch eine kapazitive Anordnung überbrückt ist. Durch diese können einerseits die Störungen an der Gleichrichterstufe kurzgeschlossen und damit vor einer Übertragung auf die Wechselspannungsquelle bewahrt werden, andererseits können dadurch Unsymmetrien in den Sperrimpedanzen der Gleichrichterstufe ausgeglichen und durch diese Unsymmetrien bedingte, parasitäre Störungsübertragungen verhindert werden.

Weitere Ausgestaltungen der Erfindung ergeben sich aus den Unteransprüchen.

Einige Ausführungsbeispiele der Erfindung sind in der Zeichnung dargestellt und werden im nachfolgenden näher beschrieben. Es zeigen
- Fig. 1: eine Schaltungsanordnung nach dem Stand der Technik,
- Fig. 2 und 3: Spannungs- und Stromverläufe in der Schaltungsanordnung nach Fig. 1,
- Fig. 4 bis 6: drei Ausführungsbeispiele der Erfindung,
- Fig. 7: Signalverlaufe der Schaltungsanordnung nach Fig. 6,
- Fig. 8 und 9: Ausführungsbeispiele für Weiterbildungen der Erfindung.

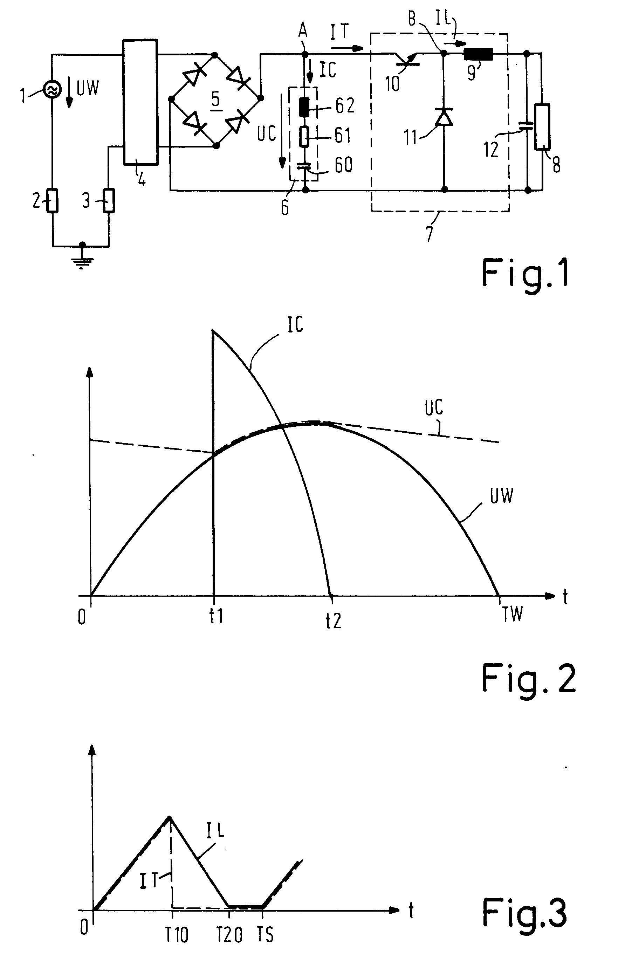

Fig. 1 zeigt eine Schaltungsanordnung zum Übertragen elektrischer Energie aus einer Wechselspannungsquelle 1 über einen Energiespeicher 6 an eine Last 8 nach dem Stand der Technik. Dabei wird die Wechselspannungsquelle 1 durch ein Stromversorgungsnetz gebildet, dessen Leitungswiderstand in dem Ersatzschaltbild der Fig. 1 durch zwei Netzimpedanzen 2, 3 dargestellt wird. Über ein Hochfrequenzfilter 4, das als Funkentstörfilter dient, wird die von der Wechselspannungsquelle 1 gelieferte Netzwechselspannung UW einer Gleichrichterstufe zugeführt, die aus einer Gleichrichterbrücke 5 aus vier Dioden (Graetz-Brücke) besteht. Die darin gleichgerichtete Netzwechselspannung lädt den Energiespeicher 6 auf. Dieser besteht vorzugsweise aus einem Elektrolytkondensator, dessen Hochfrequenz-Ersatzschaltbild in Fig. 1 wiedergegeben ist. Es umfaßt außer dem Kondensator 60 einen Zuleitungswiderstand 61 und eine Zuleitungsinduktivität 62. Anstelle des Elektroytkondensators kann der Energiespeicher 6 auch aus einem Akkumulator bestehen, der dann im Hochfrequenz-Ersatzschaltbild in Fig. 1 an die Stelle des Kondensators 60 tritt.

An den Energiespeicher 6 ist ein Schaltnetzteil 7 angeschlossen, über das die Last 8 mit Energie aus dem Energiespeicher 6 gespeist wird. Das Schaltnetzteil 7 umfaßt dazu einen als periodisch betätigter Schalter dienenden Transistor 10 und eine Spule 9, die in Reihe zur Last 8 angeordnet sind. Die Reihenschaltung aus Last 8, Spule 9 und Transistor 10 ist parallel zum Energiespeicher 6 geschaltet. Außerdem ist die Reihenschaltung aus der Spule 9 und der Last 8 durch eine Freilaufdiode 11 überbrückt und parallel zur Last 8 ist ein Kondensator 12 angeordnet.

Fig. 2 zeigt Strom- und Spannungsverläufe für das Einspeisen elektrischer Energie aus der Wechselspannungsquelle 1 in den Energiespeicher 6 für die Zeitdauer TW einer Halbwelle der Netzwechselspannung UW. Auf der Abszisse ist dabei die Zeit t aufgetragen. Die gestrichelte Linie gibt den Verlauf der Spannung UC am Energiespeicher 6 wieder. Im Zeitbereich von 0 bis zum Zeitpunkt t1 ist die Spannung UC größer als die Netzwechselspannung UW. Damit ist die Gleichrichterbrücke 5 gesperrt, es fließt kein Strom von der Wechselspannungsquelle 1 in den Energiespeicher 6. Die Spannung UC verringert sich außerdem im genannten Zeitbereich entsprechend der Energieentnahme durch die Last 8. Zum Zeitpunkt t1, wenn der Wert der ansteigenden Netzwechselspannung UW den Wert der Spannung UC am Energiespeicher 6 erreicht, wird die Gleichrichterbrücke 5 leitend, und es beginnt ein Nachladestrom IC in den Energiespeicher 6 zu fließen. Sein Verlauf ist in Fig. 2 aufgetragen. Die Spannung UC am Energiespeicher 6 folgt nun dem Verlauf der Netzwechselspannung UW, bis diese ihren Scheitelpunkt überschritten hat und mit einer Steigung wieder abfällt, die größer ist als die infolge der Energieentnahme durch das Schaltnetzteil 7 vorgegebene Spannung UC. Von diesem Zeitpunkt t2 an ist die Netzwechselspannung UW wieder geringer als die Spannung UC am Energiespeicher 6, und der Nachladestrom IC wird zu 0. Damit git für den Zeitbereich von t2 bis TW das gleiche wie für den Zeitbereich von 0 bis t1.

Die Funktion des Schaltnetzteils 7 kann von derjenigen der bisher beschriebenen Schaltungsteile zunächst unabhängig beschrieben werden. In Fig. 3 sind dazu zwei Stromverläufe aufgezeichnet. Der Transistor 10 wird mit einer Schaltfrequenz periodisch ein- und ausgeschaltet, die groß ist gegenüber der Frequenz der Netzwechselspannung UW. Wenn die Frequenz der Netzwechselspannung UW beispielsweise 50 Hz beträgt, wird der Transistor 10 üblicherweise mit einer Frequenz von mindestens 20 kHz geschaltet.

Wenn zum Zeitpunkt 0 der Transistor 10 in den leitenden Zustand geschaltet wird, beginnt durch die Spule 9 und die Last 8 ein stetig ansteigender Strom IL zu fließen. Er wird über den Transistor 10 als Strom IT aus dem Energiespeicher 6 entnommen und durch die daran anliegende Spannung UC getrieben. Zum Zeitpunkt T10 wird der Transistor 10 von der nicht dargestellten Ansteuersteuerschaltung gesperrt, so daß der Strom IT zu Null wird. Der Strom IL in der Spule 9 ist jedoch aufgrund der Energieerhaltung stetig und fließt daher auch über den Zeitpunkt T10 hinaus weiter, jetzt allerdings durch die Freilaufdiode 10. Er fällt stetig ab und wird zum Zeitpunkt T20 zu Null. Zu einem darauf folgenden Zeitpunkt TS, d.h. nach einer Periodendauer der Betätigung des Transistors 10, wird dieser wieder eingeschaltet und die Ströme IT und IL steigen erneut an. Sowohl der Energiespeicher 6 als auch der Kondensator 12 sind, gemessen an der Periodendauer TS der Betätigung des Transistors 10 so dimensioniert, daß sich die daran anliegenden Spannungen den sägezahnförmigen Strömen IT und IL nicht merkbar folgen, so daß die Last 8 stets mit einer geglätteten Gleichspannung versorgt wird. Die Ströme IT und IL wirken dann auf im wesentlichen konstante Spannungen und weisen daher wenigstens nahezu geradlinige Flanken auf.

Der Strom IT durch den Transistor 10 wird in der Schaltungsanordnung nach Fig. 1 über den Knotenpunkt A nur zum Teil aus dem Energiespeicher 6 und im übrigen unmittelbar aus der Wechselspannungsquelle 1 über die Gleichrichterbrücke 5 geliefert. Die Aufteilung ist abhängig von den Impedanzen der Gleichrichterbrücke 5, den Netzimpedanzen 2, 3 und den Impedanzen des Energiespeichers 6, d.h. insbesondere dem Zuleitungswiderstand 61 und der Zuleitungsinduktivität 62. Der aus der Wechselspannungsquelle 1 über die Gleichrichterbrücke 5 gelieferte Anteil des Stromes IT bildet durch die Erfindung zu unterdrückende Störungen. Dabei ist zu berücksichtigen, daß der Energiespeicher 6, beispielsweise ein Elektrolytkondensator, sich durch die Zuleitungsinduktivität wie ein Serienschwingkreis verhält, dessen Impedanz oberhalb der Resonanzfrequenz durch die Zuleitungsinduktivität 62 bestimmt wird. Dieser induktive Widerstand steigt mit wachsender Frequenz, so daß ein immer größer werdender Anteil des Transistorstroms IT unmittelbar von der Wechselspannungsquelle 1 über die Gleichrichterbrücke 5 geliefert wird. Das bedeutet, daß insbesondere bei hohen Schaltfrequenzen für den Transistor 10, die für eine Verringerung der Baugröße der Spule 9 und des Kondensators 12 erstrebenswert sind, immer größere Störungen an die Wechselspannungsquelle 1 geleitet werden.

Die Stärke der Übertragung der Störungen auf die Wechselspannungsquelle 1 hängt in starkem Maße vom Betriebszustand der Gleichrichterbrücke 5 ab. Im Zeitbereich zwischen t1 und t2 ist die Gleichrichterbrücke leitend und bildet somit zusammen mit den niederohmigen Netzimpedanzen 2 und 3 einen geringen Widerstand, über den ein großer Teil des Transistorstromes IT fließt. Typischerweise sind die Netzimpedanzen für die Frequenz des Stromes IT kleiner oder gleich 50 Ohm.

In den übrigen Zeitbereichen der Halbwelle der Netzwechselspannung UW sperrt die Gleichrichterbrücke 5 und bildet damit einen sehr hohen Widerstand, der im wesentlichen durch die Sperrkapazität der Gleichrichterbrücke 5, beispielsweise durch die darin angeordneten Dioden mit ihren Sperrschichtkapazitäten, bestimmt wird. Diese Sperrkapazitäten liegen im Bereich einiger Pikofarad und bilden einen so großen Widerstand, daß praktisch der gesamte Transistorstrom IT vom Energiespeicher 6 geliefert wird.

Die Erfindung macht sich nun das beschriebene unterschiedliche Verhalten der Schaltungsanordnung zu Nutze und erzielt eine Unterdrückung der Einstreuung von Störungen an die Wechselspannungsquelle 1 dadurch, daß in den Zeitintervallen, in denen sich die Gleichrichterbrücke 5 im leitenden Zustand befindet, die Betätigung des Transistors 10 unterbrochen und somit die Erzeugung von Störungen überhaupt vermieden wird. Das Hochfrequenzfilter 4 kann dann entfallen. An seiner Stelle tritt zu der Schaltungsanordnung nach Fig. 1 eine Vorrichtung zur Unterdrückung der periodischen Betätigung des Transistors 10.

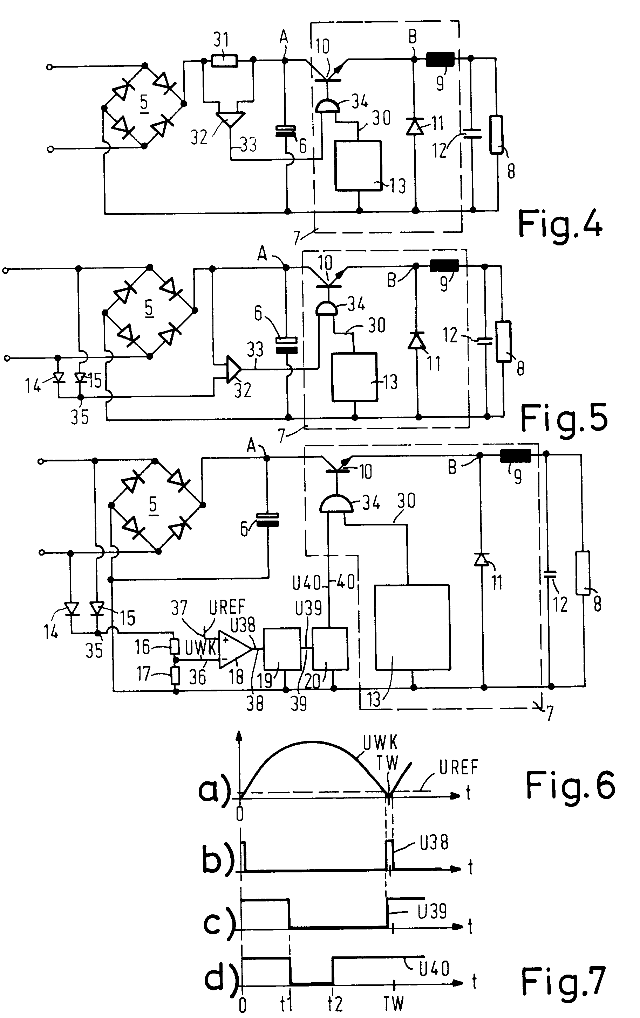

Ein Beispiel für eine derartige Schaltungsanordnung ist in Fig. 4 dargestellt, in der bereits beschriebene Schaltungsteile wieder mit identischen Bezugszeichen versehen sind. Im Schaltnetzteil 7 ist jetzt auch die Ansteuerschaltung 13 dargestellt, die den Transistor 10 periodisch betätigt und dazu mit seinem Basisanschluß über eine Ansteuerleitung 30 verbunden ist. In die Verbindung zwischen der Gleichrichterbrücke 5 und dem Knotenpunkt A ist ein Meßwiderstand 31 mit geringem Widerstandswert eingefügt, über dem eine geringe Spannung anfällt, wenn im Zeitintervall t1 bis t2 der Nachladestrom IC fließt. Der Widerstandswert des Meßwiderstands 31 wird danach bemessen, daß der durch den Nachladestrom IC hervorgerufene Spannungsanfall zum einen sicher von einem nachgeschalteten Meßverstärker 32 erfaßt wird, jedoch andererseits nur geringe Energieverluste hervorruft. Der Meßverstärker 32 gibt an seinem Ausgang 33 ein digitales Sperrsignal ab, das den logischen Wert Null annimmt, wenn der Nachladestrom IC fließt, und das in den übrigen Zeitbereichen den logischen Wert 1 aufweist. Dadurch wird ein in die Ansteuerleitung eingefügtes Und-Glied 34 im Zeitintervall zwischen t1 und t2 und damit auch der Transistor 10 gesperrt.

Anstelle des Nachladestromes IC kann auch die Differenz zwischen der Netzwechselspannung UW und der Spannung UC am Energiespeicher 6 gemessen und daraus ein Sperrsignal abgeleitet werden. Damit lassen sich Verluste im Meßwiderstand vermeiden. Eine derartige Schaltungsanordnung zeigt die Fig. 5, in der bereits beschriebene Elemente wieder mit denselben Bezugszeichen versehen sind. Darin ist parallel zur Gleichrichterbrücke 5 an die Wechselspannungsquelle 1 eine Reihenschaltung aus zwei gegensinnig gepolten Dioden 14, 15 angeschlossen, an deren Verbindungspunkt 35 die gleichgerichtete, ungeglättete Netzwechselspannung, also ein Spannungsverlauf gemäß der Kurve UW in Fig. 2, geliefert wird. Diese wird im Meßverstärker 32 mit der Spannung UC am Energiespeicher 6 verglichen. Das von seinem Ausgang 33 gelieferte Sperrsignal nimmt wieder die zu der Schaltungsanordnung nach Fig. 4 beschriebenen Werte ein.

Fig. 6 zeigt ein drittes Ausführungsbeispiel mit einer Zeitfensterschaltung. Diese umfaßt einen Komparator 18 sowie zwei monostabile Kippstufen 19 und 20. Im übrigen entsprechen mit identischen Bezugszeichen versehene Elemente denen aus den vorstehend beschriebenen Schaltungen. Bei der Anordnung nach Fig. 6 wird die gleichgerichtete, ungeglättete Netzwechselspannung UW vom Verbindungspunkt 35 der Dioden 14, 15 über einen Spannungsteiler aus zwei Widerständen 16, 17 einem ersten Eingang 36 des Komparators 18 zugeleitet, dem an einem zweiten Eingang 37 eine Referenzspannung UREF zugeführt wird. Der Komparator 18 ist vorzugsweise durch einen Differenzverstärker gebildet, dessen invertierender Eingang als erster Eingang 36 und dessen nicht invertierender Eingang als zweiter Eingang 37 des Komparators 18 dient.

Die Fig. 7 zeigt einige Signalverläufe zur Schaltungsanordnung nach Fig. 6. In Fig. 7a ist die Spannung UWK aufgetragen, die sich durch Gleichrichten mittels der Dioden 14 und 15 und anschließendes Teilen im Spannungsteiler 16, 17 am ersten Eingang 36 des Komparators 18 einstellt. Weiterhin ist durch eine gestrichelte Linie die Referenzspannung UREF dargestellt. Diese nimmt einen gegenüber der Amplitude der Spannung UWK niedrigen Wert ein, so daß die Spannung UWK während des größten Teils der Zeitdauer TW einer Halbwelle der Netzwechselspannung UW größer ist als die Referenzspannung UREF. Nur in unmittelbarer zeitlicher Umgebung der Nulldurchgänge der Netzwechselspannung UW, also z.B. in der Umgebung des Zeitpunktes 0 und des Zeitpunktes TW, sinkt die Spannung UWK unter den Wert der Spannung UREF. In diesen schmalen Zeitbereichen nimmt die Spannung U38 am Ausgang 38 des Komparators 18 einen hohen Wert an, wohingegen sie in den übrigen Zeitbereichen Null ist. Der zeitliche Verlauf der Spannung U38 ist in Fig. 7b dargestellt.

Die Spannung U38 vom Ausgang 38 des Komparators 18 wird einem Eingang der ersten monostabilen Kippstufe 19 zugeführt. Diese weist ferner einen Ausgang 39 auf, an dem eine Spannung U39 abgegeben wird, deren Verlauf in Fig. 7c dargestellt ist. Jede ansteigende Flanke der Spannung U38 löst am Ausgang 39 der ersten monostabilen Kippstufe 19 einen positiven Spannungsimpuls aus, der nach einer Zeitdauer t1, gerechnet vom Beginn der Halbwelle der Netzwechselspannung UW, an dem der Impuls der Spannung U38 ausgelöst wird, endet. Die Impulse der Spannung U39 werden über einen mit dem Ausgang 39 der ersten monostabilen Kippstufe 19 verbundenen Eingang der zweiten monostabilen Kippstufe 20 an diese weitergeleitet. Die abfallenden Flanken der Spannung U39 lösen am Ausgang 40 der zweiten monostabilen Kippstufe 20 negative Spannungsimpulse der Zeitdauer t2-t1 aus. Diese sind als Spannungsverlauf U40 in Fig. 7d dargestellt. Sie bilden ein Zeitfenster, welches genau mit dem Zeitintervall übereinstimmt, in dem der Nachladestrom IC fließt. Über den Ausgang 40 wird die Spannung U40 dem Und-Glied 34 zugeführt und sperrt während des genannten Zeitfensters die Ansteuerung des Transistors 10 über die Ansteuerleitung 30. Zum Ausgleich von durch Toleranzen oder Veränderungen der Last 8 hervorgerufenen Schwankungen der Lage und Dauer des Zeitintervalls, in dem der Nachladestrom IC fließt, kann das Zeitfenster auch etwas größer als das Zeitintervall zwischen t1 und t2 ausgelegt sein.

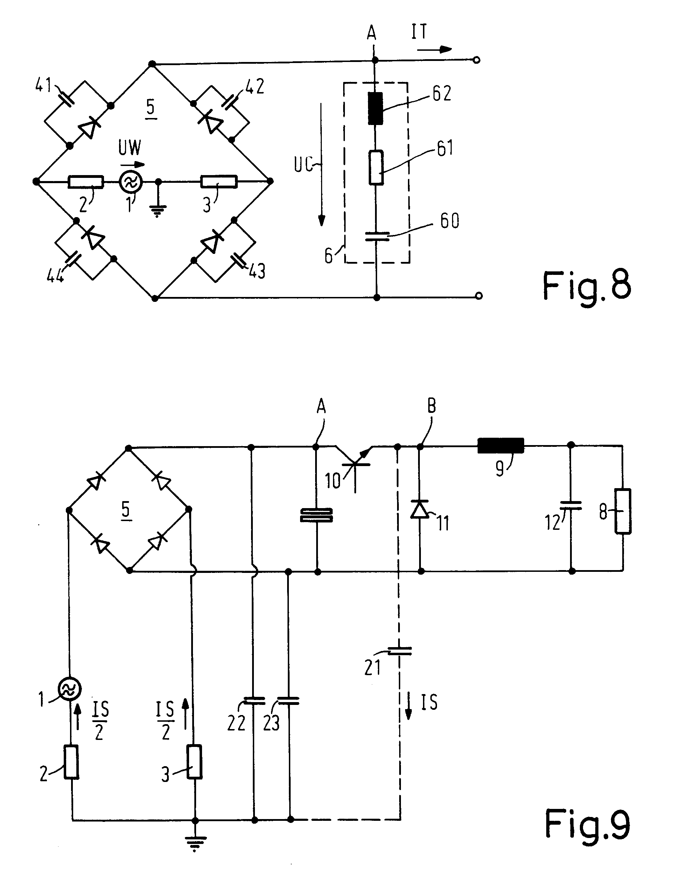

Fig. 8 zeigt ein Beispiel für eine Fortbildung der Erfindung, mit der eine weitere Reduzierung der durch den Transistor 10 an der Wechselspannungsquelle 1 hervorgerufenen Störungen erzielt werden kann. Bei der erfindungsgemäßen Schaltungsanordnung treten Störungen an der Gleichrichterbrücke 5 durch den Strom IT nur in den Zeitbereichen auf, in denen die Dioden der Gleichrichterbrücke 5 gesperrt sind. Es sind dann die Sperrschichtkapazitäten der Dioden wirksam. Sie bilden eine Brückenschaltung, in deren Querzweig die Reihenschaltung aus der Wechselspannungsquelle 1 und den Netzimpedanzen 2, 3 liegt. Wenn die Werte der Sperrkapazitäten aller Dioden identisch sind, ist die Brücke abgeglichen und in die Wechselspannungsquelle 1 können keine Störungen eingestreut werden. Die Sperrschichtkapazitäten der Dioden sind jedoch stark von den an ihnen anliegenden Spannungen abhängig. Diese ändert sich aber durch die Netzwechselspannung UW laufend, so daß selbst bei identischen Dioden die Abgleichbedingung nur während der Nulldurchgänge der Netzwechselspannung UW erfüllt wird. In der Schaltungsanordnung nach Fig. 8 sind daher die Dioden der Gleichrichterbrücke 5 durch eine kapazitive Anordnung aus vier Abgleichkondensatoren 41, 42, 43, 44 überbrückt, von denen je einer einer der Dioden der Gleichrichterbrücke 5 parallelgeschaltet ist. Die Abgleichkondensatoren 41, 42, 43, 44 weisen dabei Kapazitätswerte auf, die gegenüber dem Maximalwert der durch die Aussteuerung mit der Netzwechselspannung UW erreichten Sperrschichtkapazität der Dioden dominieren. Der Abgleich der Gleichrichterbrücke 5 wird dann im wesentlichen durch die Abgleichkondensatoren 41, 42, 43, 44 bestimmt und damit weitgehend unabhängig von der Aussteuerung der Gleichrichterbrücke 5 durch die Netzwechselspannung UW. Damit wird die Übertragung von Störungen durch den Strom IT auf die Wechselspannungsquelle 1 noch einmal stark vermindert.

Während die bisher beschriebenen Maßnahmen zur Reduzierung der sogenannten symmetrischen Störungen, die auf beiden Netzleitungen und damit in beiden Netzimpedanzen 2, 3 gegenphasig auftreten, dienen bzw. anhand derer beschrieben sind, werden durch die Erfindung auch die sogenannten asymmetrischen Störungen reduziert. Diese entstehen beispielsweise dadurch, daß das Potential hinter dem Transistor 10, d.h. am Knotenpunkt B zwischen dem Transistor 10, der Spule 9 und der Freilaufdiode 11, durch die abwechselnden Leitphasen und Sperrphasen des Transistors 10 und der Freilaufdiode 11 zwischen einem niedrigen Wert nahe dem Erdpotential und einem hohen Wert nahe der Spannung UC hin und her geschaltet wird. Durch die nicht völlig vermeidbaren parasitären Kapazitäten zwischen dem Knotenpunkt B und den Masse- bzw. Erdleitungen fließen dadurch kapazitive Störströme, die gleichphasig und im wesentlichen mit gleichen Beträgen auf die beiden Netzimpedanzen 2, 3 in Fig. 1 verteilt sind. In Fig. 9 ist dies durch den Strom IS und die parasitäre Kapazität 21 im Ersatzschaltbild schematisch dargestellt. Aus diesem Schaltbild, in dem im übrigen bereits zu den vorhergehenden Figuren beschriebene Elemente wieder mit denselben Bezugszeichen versehen sind, ist ersichtlich, daß sich der parasitäre Strom IS auf die beiden durch die Netzimpedanzen 2 und 3 gebildeten Zweige aufteilt und über die Gleichrichterbrücke 5, den Punkt A und den Transistor 10 zum Punkt B zurückfließt. Bei einem typischen Wert der parasitären Kapazität 21 von weniger als 100 pF bilden die Sperrschichtkapazitäten der Dioden der Gleichrichterbrücke 5 und gegebenenfalls die Abgleichkondensatoren 41, 42, 43, 44 keine hinreichend hohe Impedanz, um den Strom IS wirksam zu unterdrücken, und die niedrigen Widerstandswerte der Netzimpedanzen 2, 3 mit 50 Ohm oder weniger sind erst recht nicht dazu geeignet. Zur Abhilfe werden nun die Nebenschlußkondensatoren 22, 23 parallel zu der Anordnung aus Wechselspannungsquelle 1, Netzimpedanz 2, 3 und Gleichrichterbrücke 5 vorgesehen, die so dimensioniert sind, daß sie für den Strom IS eine wesentlich niedrigere Impedanz bieten als die gesperrte Gleichrichterbrücke 5. Dadurch kann mit geringem Aufwand, d.h. mit Kondensatoren verhältnismäßig geringer Kapazitätswerte, auch für diese Störungen eine sehr wirkungsvolle Unterdrückung erzielt werden.

Insgesamt ermöglicht die Erfindung einen sehr einfachen und kompakten Aufbau selbst dann, wenn die Nebenschlußkondensatoren 22, 23 nach Fig. 9 und die Abgleichkondensatoren 41, 42, 43, 44 nach Fig. 8 nebeneinander vorgesehen werden. Der Vorteil der Vereinfachung wird auch nicht dadurch aufgehoben, daß gemäß der Erfindung die Speisung der Last 8 während der Zeitintervalle, in denen der Nachladestrom IC fließt, unterbrochen ist und der Kondensator 12 deshalb entsprechend dimensioniert werden muß. Besonders günstige Verhältnisse ergeben sich, wenn anstelle des Kondensators 12 parallel zur Last ein Akkumulator angeordnet ist, der eine größere Freiheit in der Wahl der Zeitbereiche der Nachladung ermöglicht.

## Patentansprüche

1. Schaltungsanordnung zum Übertragen elektrischer Energie aus einer Wechselspannungsquelle, die in bestimmten Zeitintervallen zum Einspeisen der Energie in einen vorzugsweise kapazitiven und/oder chemischen Energiespeicher mit diesem über eine Gleichrichterstufe verbunden ist, mit einem durch eine Ansteuerschaltung periodisch betätigten Halbleiterschalter zum Entnehmen der Energie aus dem Energiespeicher,
**dadurch gekennzeichnet**, daß die Ansteuerschaltung (13) vorgesehen ist zum Betätigen des Halbleiterschalters (10) nur außerhalb der Zeitintervalle (t2-t1), in denen die Wechselspannungsquelle (1) mit dem Energiespeicher (6) verbunden ist.

2. Schaltungsanordnung nach Anspruch 1,
**dadurch gekennzeichnet,** daß die Wechselspannungsquelle (1) durch ein Stromversorgungsnetz gebildet wird.

3. Schaltungsanordnung nach Anspruch 1 oder 2,
**gekennzeichnet durch** einen Detektor (31,32 bzw. 14,15,32) zum Detektieren der Zeitintervalle, in denen die Wechselspannungsquelle (1) mit dem Energiespeicher (6) verbunden ist, und zum Sperren der Ansteuerschaltung (13) in diesen Intervallen.

4. Schaltungsanordnung nach Anspruch 3,
**dadurch gekennzeichnet**, daß der Detektor als Stromdetektor (31, 32) ausgebildet ist zum Detektieren eines Ladestromes (IC) von der Wechselspannungsquelle (1) in den Energiespeicher (6).

5. Schaltungsanordnung nach Anspruch 3,
**dadurch gekennzeichnet,** daß der Detektor als Spannungsdetektor (14,15,32) ausgebildet ist zum Detektieren einer Spannungsdifferenz bestimmter Richtung und/oder Höhe zwischen der Wechselspannungsquelle (1) und dem Energiespeicher (6).

6. Schaltungsanordnung nach Anspruch 1 oder 2,
**gekennzeichnet durch** eine Zeitfensterschaltung (14 bis 20) zum Sperren des Schalters (10), von der Wechselspannungsquelle (1) gesteuert, in Zeitfenstern, die die Zeitintervalle (t2-t1) zum Einspeisen der Energie in den Energiespeicher (6) umfassen.

7. Schaltungsanordnung nach Anspruch 1 oder einem der Ansprüche 2 bis 6 in Verbindung mit Anspruch 1,
**dadurch gekennzeichnet**, daß die Gleichrichterstufe (5) durch eine kapazitive Anordnung (22,23; 41 bis 44) überbrückt ist.

8. Schaltungsanordnung nach Anspruch 7,
**dadurch gekennzeichnet**, daß die kapazitive Anordnung eine Kondensatorschaltung (22,23) umfaßt, die an den Energiespeicher (6) geführte Anschlüsse der Gleichrichterstufe (5) mit einem Massepol der Wechselspannungsquelle (1) verbindet.

9. Schaltungsanordnung nach Anspruch 7,
**dadurch gekennzeichnet**, daß die Gleichrichterstufe (5) eine Gleichrichterbrücke und die kapazitive Anordnung Abgleichkondensatoren (41 bis 44) umfaßt, von denen je einer einem Element der Gleichrichterbrücke parallelgeschaltet ist und einen Kapazitätswert aufweist, der gegenüber der Sperrkapazität des Elementes dominiert.

## Claims

1. A circuit arrangement for the transmission of electric power from an a.c. source which, for feeding the power into a preferably capacitive and/or chemical power-storage means, is connected to said power-storage means *via* a rectifier stage in given time intervals, comprising a semiconductor switch for withdrawing power from the power storage means, which semiconductor switch is periodically actuated by a control circuit,
**characterized in that** the control circuit (13) is adapted to actuate the semiconductor switch (10) only outside the time interval (t2-t1) in which the a.c. source (1) is connected to the power-storage means (6).

2. A circuit arrangement as claimed in Claim 1,
**characterized in that** the a.c. source (1) is a power-supply mains.

3. A circuit arrangement as claimed in Claim 1 or 2,
**characterized by** a detector (31, 32 and 14, 15, 32) for detecting the time intervals in which the a.c. source (1) is connected to the power-storage means (6), and for inhibiting actuation of the control circuit (13) in said intervals.

4. A circuit arrangement as claimed in Claim 3,
**characterized in that** the detector is constructed as a current detector (31, 32) for detecting a charging current (IC) from the a.c. source (1) into the power-storage means (6).

5. A circuit arrangement as claimed in Claim 3,
**characterized in that** the detector is constructed as a voltage detector (14, 15, 32) for detecting a voltage difference of a given direction and/or magnitude between the a.c. source (1) and the power-storage means (6).

6. A circuit arrangement as claimed in Claim 1 or 2,
**characterized by** a time-gate circuit (14 to 20) for inhibiting actuation of the switch (10), under control of the a.c. source (1), in time gates comprising the time intervals (t2-t1) in which power is fed into the power-storage means (6).

7. A circuit arrangement as claimed in Claim 1, or any one of the Claims 2 to 6 when appendant to Claim 1,
**characterized in that** the rectifier stage (5) is shunted by a capacitive arrangement (22, 23; 41 to 44).

8. A circuit arrangement as claimed in Claim 7,
**characterized in that** the capacitive arrangement comprises a capacitor circuit (22, 23) which connects those terminals of the rectifier stage (5) which are connected to the power-storage means (6) to an earth terminal of the a.c. source (1).

9. A circuit arrangement as claimed in Claim 7,
**characterized in that** the rectifier stage (5) comprises a rectifier bridge and the capacitive arrangement comprises trimming capacitors (41 to 44) which are each arranged in parallel with an element of the rectifier bridge and which each have a capacitance value which is dominant relative to the depletion-layer capacitance of the element.

## Revendications

1. Circuit de transmission d'énergie électrique à partir d'une source de tension alternative qui, dans des intervalles de temps déterminés, pour introduire l'énergie dans un accumulateur d'énergie de préférence capacitif et/ou chimique, est reliée à celui-ci à travers un étage redresseur, circuit comportant un commutateur semiconducteur manoeuvré périodiquement par un circuit d'excitation, pour prélever l'énergie sur l'accumulateur d'énergie, caractérisé en ce que le circuit d'excitation (13) est conçu pour manoeuvrer le commutateur semiconducteur (10) seulement en dehors des intervalles de temps (t2-t1) pendant lesquels la source de tension alternative (1) est reliée à l'accumulateur d'énergie (6).

2. Circuit selon la revendication 1, caractérisé en ce que la source de tension alternative (1) est constituée par un réseau d'alimentation en courant.

3. Circuit selon la revendication 1 ou 2, caractérisé par un détecteur (31, 32 ou 14, 15, 32) servant à détecter les intervalles de temps pendant lesquels la source de tension alternative (1) est reliée à l'accumulateur d'énergie (6) et à bloquer le circuit d'excitation (13) au cours de ces intervalles de temps.

4. Circuit selon la revendication 3, caractérisé en ce que le détecteur est réalisé sous la forme d'un détecteur de courant (31, 32) pour détecter un courant de charge (IC) circulant à partir de la source de tension alternative (1) vers l'accumulateur d'énergie (6).

5. Circuit selon la revendication 3, caractérisé en ce que le détecteur est réalisé sous la forme d'un détecteur de tension (14, 15, 32) pour détecter une différence de tension de sens et/ou de valeur déterminés existant entre la source de tension alternative (1) et l'accumulateur d'énergie (6).

6. Circuit selon la revendication 1 ou 2, caractérisé par un circuit de fenêtre de temps (14 à 20) pour bloquer, sous la commande de la source de tension alternative (1), le commutateur (10) dans des fenêtres de temps comprenant les intervalles de temps (t2-t1) d'introduction de l'énergie dans l'accumulateur d'énergie (6).

7. Circuit selon la revendication 1 ou l'une des revendications 2 à 6 en tant que dépendantes de la revendication 1, caractérisé en ce que l'étage redresseur (5) est shunté par un montage capacitif (22, 23; 41 à 44).

8. Circuit selon la revendication 7, caractérisé en ce que le montage capacitif comprend un montage de condensateurs (22, 23) qui relie des bornes de l'étage redresseur (5) raccordées à l'accumulateur d'énergie (6) à un pôle de masse de la source de tension alternative (1).

9. Circuit selon la revendication 7, caractérisé en ce que l'étage redresseur (5) comprend un redresseur en pont et le montage capacitif de condensateurs de filtrage (41 à 44) montés chacun en parallèle avec un élément du redresseur en pont et présentant chacun une valeur de capacité qui prédomine par rapport à la capacité de couche d'arrêt de l'élément.
